Europäisches Patentamt

European Patent Office

Office européen des brevets

(19)

(11) **EP 0 611 640 B1**

(12) **EUROPÄISCHE PATENTSCHRIFT**

(45) Veröffentlichungstag und Bekanntmachung des Hinweises auf die Patenterteilung:
**09.10.1996 Patentblatt 1996/41**

(51) Int. Cl.$^6$: **B29B 9/14**, C08K 7/14
// B29K23/00, B29K105/10

(21) Anmeldenummer: **94102315.2**

(22) Anmeldetag: **16.02.1994**

(54) **Granulat aus faserverstärktem Thermoplast**

Fiber reinforced thermoplastic pellet

Granulé en résine thermoplastique renforcée de fibres

(84) Benannte Vertragsstaaten:
**AT BE CH DE DK ES FR GB IT LI NL**

(30) Priorität: **19.02.1993 DE 9302401 U**

(43) Veröffentlichungstag der Anmeldung:
**24.08.1994 Patentblatt 1994/34**

(73) Patentinhaber: **HOECHST AKTIENGESELLSCHAFT**
**65929 Frankfurt am Main (DE)**

(72) Erfinder:
• **Heckel, Horst**
**DE-64285 Darmstadt (DE)**
• **Skaletz, Detlef, Dr.**
**DE-55128 Mainz (DE)**
• **Wagner, Bruno**
**DE-65611 Brechen (DE)**
• **Heydweiller, Joachim**
**DE-65428 Rüsselsheim (DE)**

(56) Entgegenhaltungen:
EP-A- 0 056 703          EP-A- 0 117 098
EP-A- 0 364 829          LU-A-    66 632

• PATENT ABSTRACTS OF JAPAN vol. 14, no. 517 (M-1047)13. November 1990 & JP-A-02 215 506 (DAINIPPON INK & CHEM INC.) 28. August 1990
• PATENT ABSTRACTS OF JAPAN vol. 12, no. 145 (M-693)6. Mai 1988 & JP-A-62 268 612 (NITTO BOSEKI CO. LTD.) 21. November 1987
• DATABASE WPI Section Ch, Week 9013, Derwent Publications Ltd., London, GB; Class AJM, AN 90-096246 C13! & JP-A-02 049 062 (ASAHI CHEMICAL IND. K.K.) 19. Februar 1990

EP 0 611 640 B1

## Beschreibung

Die Neuerung betrifft ein Granulat aus faserstärktem Thermoplast-Material, in eine Vielzahl von Einzelfilamenten der Verstärkungsfaser in einer Matrix des Thermoplast-Materials parallel angeordnet ist und bei der die Faserlänge der Granulatlänge entspricht und im Bereich von 3 mm bis 8 mm liegt.

Nach dem Verfahren der EP-A1-56 703 wird durch einen Pultrusionsprozeß ein faserverstärkter, in der Hitze verformbarer Verbundwerkstoff gewonnen, der thermoplastisches Polymer und mindestens 30 Vol.-% parallel ausgerichtete Verstärkungsfäden enthält. Pultrudierte Stränge aus glasfaserverstärkten Thermoplasten können zu Granalien einer Länge von 3 bis 100 mm zerschnitten werden.

Das Verfahren soll es ermöglichen, konventionelle thermoplastische Werkstoffe mit hohem Molekulargewicht zum Imprägnieren von Fasersträngen einzusetzen,. Das Verfahren eignet sich jedoch nicht mehr für Polymere, die bei der Verarbeitungstemperatur eine hohe Viskosität (oberhalb 100 Ns/m$^2$) aufweisen, weil eine Benetzung von Fasersträngen mit solchen Schmelzen im Pultrusionsprozeß nicht mehr möglich ist.

Bisher auf dem Markt verfügbare faserverstärkte Granulate aus Thermoplast-Material, die für den Spritzguß oder die Extrusion eingesetzt wurden, leiten sich von Polymeren niedriger Schmelzviskosität ab. Der Granulat-Durchmesser beträgt üblicherweise 1,7 bis 4 mm, die Länge mindestens 10 mm und das Verhältnis Länge/Durchmesser etwa 0,03 bis 0,4. Bei der Verarbeitung mit kleinen Plastifizieraggregaten, d.h. kleinem Trichterdurchmesser, ist die Rieselfähigkeit häufig nicht ausreichend. Es bestand daher die Aufgabe, neue Granulate mit verbesserter Rieselfähigkeit anzugeben.

Die Neuerung betrifft ein Granulat der eingangs genannten Gattung, das dadurch gekennzeichnet ist, daß die Schmelzviskosität des Thermoplast-Materials über 100 Pa·s liegt, der Durchmesser der Granulate gemessen senkrecht zur Faserrichtung 1,7 bis 5 mm und das Verhältnis Durchmesser/Länge des Granulats 0,4 bis 1,66 beträgt. Die Schmelzviskosität wird dabei bei niedrigen Schergeschwindigkeiten gemessen.

Zweckmäßige Weiterbildungen der Erfindung sind in den abhängigen Ansprüchen beschrieben.

Zur Herstellung eines faserverstärkten Verbundmaterials wird vorzug Vielzahl von Endlosfäden, insbesondere mit Einzelfilament-Durchmessern von 7 bis 30 Mikrometern, zur Bildung eines Bandes parallel angeordnet und gespannt, das Fadenband mit aufgeschmolzenem, thermoplastischen Polymer in einem Schmelz-Pultrusionsverfahren benetzt, wobei man das Fadenband über mindestens zwei beheizte Spreizeroberflächen zieht und man im erstarrenden Fadenband einen Volumenanteil an 5 bis 70 Vol.-% an Endlosfäden einstellt. Die Schmelze weist, gemessen bei niedrigen Schergeschwindigkeiten, eine Viskosität von 105 bis 2.500 Ns/m$^2$ (= Pa.s) auf, die Zugspannung beim Einlaufen in die erste Spreizeroberfläche vorzugsweise 5 N bis 50 N pro 4.000 Einzelfilamente. Die Geschwindigkeit des Fadenbandes kann 3 m/min betragen. Vorzugsweise liegt die Viskosität der Schmelze im Bereich von 130 - 2000 Pa·s, insbesondere 130 - 500 Pa·s. Die Einzelfilament-Durchmesser der Endlosfäden liegen vorzugsweise im Bereich von 7 bis 24 µm. Der Volumenanteil an Endlosfäden liegt vorzugsweise bei 15 bis 70 Vol.-%. Das Zerkleinern der pultrudierten Stränge ist dem Fachmann bekannt.

Es hat sich gezeigt, daß mit steigender Viskosität der Schmelze auch die erforderliche Abzugsspannung ansteigt. Diese beträgt bei eines Viskosität von 105 Pa·s mindestens 5 N. Sie steigt ferner mit der Filamentoberfläche des Fadenstranges. Die Zugspannung beim Abziehen des imprägnierten Fadenbandes von der letzten Spreizeroberfläche ist höher als die Zugspannung beim Einlaufen in die erste Spreizeroberfläche und beträgt vorzugsweise mindestens 50 N pro 4000 Einzelfilamente.

Aus Beispiel 49 der EP-PS 56703 ist bereits bekannt, daß die Spannung, mit der das imprägnierte Faserband aus einer Schmelze von 20 Ns/m$^2$ (und damit von der Spreizeroberfläche) gezogen wird, etwa 3,8 kg (für einen Strang von 6.000 Filamenten) betragen soll. Für hochviskose Schmelzen ist diese Abzugspannung, d.h. die Zugspannung beim Einlaufen in die erste Spreizeroberfläche wesentlich höher. Bevorzugt sind Abzugsspannungen im Bereich von 20 bis 80 % der Reißfestigkeit des unbenetzten Fadenbandes.

Als Thermoplast-Material für die Granalien sind insbesondere Polypropylen, Polyamide, Polyoxymethylen, Polyethylen, Polyurethan, Polyphenylensulfid, Polycarbonat, Polyethylen- und Polybutylenterephthalat, Polyaryletherketone mit entsprechendem Molekulargewicht sowie deren Mischungen einsetzbar. Die Schmelzpunkte dieser Polymeren liegen im Bereich 135-265°C. Eine möglichst vollständige Benetzung der Verstärkungsfasern sollte sichergestellt sein. Die hohe Viskosität der Schmelze ist ein Merkmal von Produkten mit hohem Molekulargewicht. Das hohe Molekulargewicht verbessert das Recyclierverhalten, weil man sich bei erneutem (wiederholten) Aufschmelzen trotz oxidativem thermischem Abbau der Schmelze (und Absinken der Schmelzviskosität) noch im Bereich hoher Molekulargewichte befindet.

Vorzugsweise ist der Querschnitt der pultrudierten Fasersträge und damit der erzeugten Granalien etwa kreisförmig.

Das Fasermaterial besteht aus Glas-, Kohlenstoff-, Aramid-, Stahl- oder Synthesefasern.

Der Volumenanteil an Fasern im Halbzeug kann durch Einstellen der Förderrate der Polymerschmelze in Relation zur Filamentgeschwindigkeit beeinflußt werden.

Ferner können durch Lochbleche überflüssige Anteile von Polymerschmelze abgestreift werden.

Die beim angegebenen Verfahren benötigten parallel unidirektional orientierten Verstärkungsfäden, die aus vielen Filamenten bessehen, werden von Faserspulen (Rovings) unter Regelung der Abzugskraft abgespult. Diese Regelung kann mechanisch, mechanisch-physikalisch, elektrisch oder elektronisch erfolgen. Üblicherweise liegt diese direkt aufgebrachte Abzugsvorspannung im Bereich von 10 N bis etwa 25 N, je nach Art der verwendeten Rovings und Stärke der Fasern.

Es hat sich herausgestellt, daß die einmal eingestellte Abzugsspannung vorteilhafterweise möglichst konstant gehalten werden soll.

Eine Apparatur, die sich besonders gut eignet, um auf mechanische Weise die Abzugsspannung konstant zu halten, ist Gegenstand des deutschen Gebrauchsmusters 9 107 510.6 (Bolenz & Schäfer Maschinenfabrik GmbH).

Die Vorspannung kann, falls erforderlich, durch Einfügen von einem oder mehreren weiteren Spannstabpaaren zwischen Spule und Imprägniervorrichtung weiter erhöht werden. Dabei bleibt die zeitliche als auch die Roving-abhängige Konstanz der Vorspannung gewährleistet.

Durch die Anzahl, den Durchmesser und die den Umschlingungswinkel bestimmende Position der Spannstäbe läßt sich die zum Transport der Filamente benötigte Abzugsspannung in weiten Grenzen verändern. Dabei steigt die Spannung ausgehend von der Spule in Richtung Bremssystem, Leitorgan/Kämmen bis zu den Umlenkstäben vor der 1. Spreizeroberfläche immer weiter an. Nach Benetzen des Fadens nimmt (in Richtung Aufwickelspule für Verbundmaterial) die Spannung weiter zu.

Die so parallel ausgerichteten und vorgespannten Fasern laufen nun in die Imprägniervorrichtung, insbesondere einer Imprägnierdüse ein. Zur Beschleunigung des Durchsatzes können die Fasern vorgeheizt werden. Dabei haben sich Temperaturen bis 100 K über der Verarbeitungstemperatur der Schmelze bewährt. Das Aufheizen der Filamente kann durch Infrarot-, Kontakt-, Strahlungs- oder Heißgasvorwärmung erfolgen.

Vorrichtungen mit Spreizeroberflächen zur Imprägnierung von Fasermaterial sind bekannt. Aus US-PS 4439387 ist eine Extruder-Apparatur bekannt, bei der mehrere Faserstränge an unterschiedlichen Stellen, die in Transportrichtung der Masse hintereinander angeordnet sind, in das mit Polymerschmelze gefüllte Innere der Apparatur eingezogen und dort mit Schmelze imprägniert werden. Die Spreizeroberflächen 212, 214 und 216 sollen dabei die Benetzung der Faserstränge mit Schmelze verbessern.

Eine Apparatur, die sich gut zur Durchführung des angegebenen Verfahrens eignet, ist in US-PS 4 957 422 beschrieben. Auf die in Fig. 1 dargestellte Schikane (b) im Einlaufteil (1) der Apparatur (vor Benetzen mit Schmelze) kann jedoch hier verzichtet werden.

Die verwendete Imprägniervorrichtung ist vorzugsweise im wesentlichen geschlossen, so daß der Zutritt von Luftsauerstoff und die damit verbundene thermooxydative Schädigung des Polymers klein gehalten werden kann. Innerhalb der Imprägniervorrichtung werden die Fasern vorzugsweise über mindestens drei Spreizeroberflächen gezogen. Diese sind wellenförmig ausgebildet.

Mit einer breiten Imprägnierdüse kann man eine Vielzahl von einzelnen Fadenbändern gewinnen. Bei Verwendung einer Breitschlitzdüse kann man auch die Gesamtheit der benetzten Fadenbänder zu einem einzigen Band kombinieren und dieses anschließend einem Glättwalzwerk zuführen. Die Breitschlitzdüse kann z.B. Schlitzhöhen zwischen 0,15 - 5, insbesondere 0,7 - 2 mm aufweisen.

Die Teilstränge können durch kontrollierte Walzensysteme geformt werden und z.B. einen rechteckigen, elliptischen oder kreisförmigen Querschnitt erhalten.

Herstellbar sind Halbzeuge in Form von endlosen, breiten Bändern (Tapes) bis zu 500 mm, bevorzugt 100 bis 320 mm und Dicken zwischen 0,2 und 0,7 mm, weiterhin Profile in einem weiten Abmessungsbereich (flach 25 x 0,25 mm, 5 x 0,4 mm, 3,5 x 0,8 mm usw., Rundprofile bis zu Durchmessern von etwa 5 mm) ein- oder mehrsträngig gefahren, oder Stränge mit Durchmessern bis zu 5 mm, die anschließend zu Längenabschnitten (Pellets) von 3 bis 100 mm, bevorzugt 10 bis 50 mm geschnitten werden können. Auch diese Stränge sind als einzelnes Halbzeug oder in einer Anzahl bis zu 150 Strängen parallel und simultan herstellbar.

Die Erfindung wird durch die Beispiele näher erläutert.

Beispiel

Ein Fadenband aus Glasfaser (E-Glas OCF 1570) wurde mit einer hohen Zugspannung (15 N/4000 Einzelfäden, beim Einlaufen in erste Spreizeroberfläche gemessen) mit geschmolzenen Polypropylen (= PP) pultrudiert (Geschwindigkeit des Fadenbandes 3,3 m/min). Das erhaltene Verbundmaterial hatte ein Gewicht von 4,420 g/m. Durch Veraschung ergab sich ein Glasgehalt von 47,3 Gew.-%. Daraus errechnet sich ein Gehalt von 2,330 g/m PP und 2,090 g/m Glas. Das hydrostatisch bestimmte Volumen des Verbundmaterials betrug 3,451 $cm^3$/m. Daraus und aus dem Gewicht pro m errechnet sich eine Dichte des Verbundmaterials von 1,281 g/$cm^3$. Die Dichte des PP beträgt 0,907 g/$cm^3$, die des Glases 2,588 g/$cm^3$.

Die Porosität wird nach der Formel

$$\text{Vol-\% Poren} = 100 \cdot (1 - Gg/dg + Gp/dp) : V$$

errechnet.

Dabei bedeutet

Gg      = Gewicht Glasanteil/m
dg      = Dichte Glas
Gp      = Gewicht Polymeranteil/m
dp      = Dichte Polymer
V       = Volumen/m

Im Beispiel errechnet sich die Porosität zu 2.15 Vol-%.

Bei einem Vergleichsversuch mit unveränderter Zuführung von PP-Schmelze und Fadenmaterial wurde nur die Zugspannung verringert. Das erhaltene Verbundmaterial hatte ein Gewicht von 4,214 g/m. Durch Veraschung ergab sich ein Gehalt von 49,2 Gew.-% Glas. Das hydrostatisch bestimmte Volumen des Verbundmaterials betrug 3,379 cm$^3$/m. Daraus errechnet sich eine Porosität von 6,45 Vol-%.

Wie der Vergleich zeigt, erlaubt die Bestimmung des Stranggewichts (längenbezogene Masse) alleine keine zuverlässige Bestimmung des Porenvolumens. Durch die Verringerung der ursprünglich hohen Abzugspannung steigt die unerwünschte Porosität etwa um den Faktor 3.

## Patentansprüche

1.  Granulat aus faserverstärktem Thermosplast-Material, wobei eine Vielzahl von Einzelfilamenten der Verstärkungsfaser in einer Matrix des Thermoplast-Materials parallel angeordnet sind, die Faserlänge der Granulatlänge entspricht und im Bereich von 3 mm bis 8 mm liegt, dadurch gekennzeichnet, daß die Schmelzviskosität des Thermoplast-Materials über 100 Pa•s liegt, der Durchmesser der Granulate gemessen senkrecht zur Faserrichtung 1.7 bis 5 mm und das Verhältnis Durchmesser/Länge des Granulats 0,4 bis 1,66 beträgt.

2.  Granulat gemäß Anspruch 1, dadurch gekennzeichnet, daß die Verstärkungsfasern aus Glas bestehen.

3.  Granulat gemäß Anspruch 1, dadurch gekennzeichnet, daß das thermoplastische Material aus Polypropylen besteht.

4.  Granulat gemäß Anspruch 1, dadurch gekennzeichnet, daß der Anteil an Verstärkungsfasern im Granulat 3 bis 67 Vol.-% beträgt.

## Claims

1.  A granule composed of fiber-reinforced thermoplastic material, in which a multiplicity of individual filaments of the reinforcing fiber are arranged in parallel in a matrix of the thermoplastic material, the fiber length corresponds to the granule length and is in the range from 3 mm to 8 mm, wherein the melt viscosity of the thermoplastic material is above 100 Pa.s, the diameter of the granule measured perpendicular to the fiber direction is 1.7 to 5 mm and the ratio diameter:length of the granule is 0.4 to 1.66.

2.  The granule as claimed in claim 1, wherein the reinforcing fibers consist of glass.

3.  The granule as claimed in claim 1, wherein the thermoplastic material consists of polypropylene.

4.  The granule as claimed in claim 1, wherein the proportion of reinforcing fibers in the granule is 3 to 67 % by volume.

## Revendications

1.  Granulé en matière thermoplastique renforcée de fibres, un grand nombre de filaments individuels des fibres de renforcement étant disposés en parallèle dans une matrice de matière thermoplastique, la longueur des fibres correspond à la longueur des granulés et se trouve dans l'intervalle de 3 mm à 8 mm, caractérisée en ce que la viscosité à chaud de la matière thermoplastique est supérieure à 100 Pa.s, le diamètre des granulés mesuré perpendiculairement au sens des fibres est de 1,7 à 5 mm, le rapport du diamètre/longueur du granulé est de 0,4 à 1,66.

2.  Granulé selon la revendication 1, caractérisé en ce que les fibres de renforcement sont des fibres de verre.

3.  Granulé selon la revendication 1, caractérisé en ce que la matière thermoplastique est composée du polypropylène.

4.  Granulé selon la revendication 1, caractérisé en ce que le taux en fibres de renforcement dans le granulé est de 3 à 67 % en volume.